# EUROPEAN PATENT APPLICATION

(11) **EP 4 086 498 A1**
(43) Date of publication of application: **09.11.2022**
(21) Application number: 22382406.1
(22) Date of filing: 28.04.2022
(51) Int. Cl.: F16L 55/11, F16J 15/00, F16L 57/00, B65D 39/02, B65D 59/02

(54) **SEALING ELEMENT FOR PIPES**

(30) Priority: 07.05.2021 ES 202130942 U
(71) Applicant: Brao Amo, Antonio, 08206 Sabadell (ES)
(72) Inventor: Brao Amo, Antonio, 08206 Sabadell (ES)
(74) Representative: Isern Patentes y Marcas S.L.

(57) **Abstract**

The present invention relates to a sealing element for pipes, which comprises a body of injection-mouldable plastic material, being formed by a central rod section that has at one end a circular head region that acts by way of a grip area, the rod section including in a downward direction from said head region, a first centring region with a generally inverted frustoconical shape, a second region with a discoidal outer contour that is defined by at least two flexible fins formed from a pair of diametrically opposed grooves and a third positioning region with a discoidal outer contour, the second region being larger in diameter than the first and third regions, including at least two extensions spaced apart from each other, protruding in the same direction perpendicular to the central rod section, which have a length equal to or less than the diameter of the third positioning region, characterised in that it has a fourth region with a discoidal outer contour defined by at least two flexible fins formed from a pair of diametrically opposite grooves, said fourth region being located between the second region and the third region.

## Description

The object of the present invention is to provide a sealing element for pipes.

More specifically, the invention proposes the development of a new sealing element for pipes that is simple to manufacture and place, reducing the effort that the operator or user must make to place the sealing element at the end of the pipe, especially for large inner diameters between 4 and 50 mm.

### BACKGROUND OF THE INVENTION

It is usual that once tubular elements have been manufactured, intended, for example, for creating conduits to enable the passage of fluids, they are accumulated or stored in open outdoor spaces and/or in enclosed areas. Since the two opposite ends of such conduits are exposed to the outer environment, the inside thereof is subjected to possible fouling agents or small animals, such as insects, rodents, etc.

To solve this problem, document ES 1236244 is known, which defines a closure plug that satisfactorily solves the aforementioned drawback. However, it has been observed that, due to the geometric configuration of the plug, there may be difficulties during the manufacturing process thereof, mainly concentrated during the step of removing the parts from the injection mould, since sometimes the parts are not automatically released from the manufacturing mould as would be desirable. This is essentially due to the distance between the wall of the rod and the outer rims which have a larger diameter, which on such occasions requires the help of an operator to ensure the complete removal of all the parts from the mould.

Moreover, depending on the inner diameter of the pipe to be sealed, although the placement of a reduced number of sealed elements such as those described above does not imply a considerable effort for the operator, when the number of sealing elements is very high and requires considerable time, due to the continuous and prolonged effort that the operator makes with his fingers to fix the seal at the ends of the tube or conduit, it ends up causing discomfort in the area of the operator's fingers, so there is still a need to further facilitate the work of the operator, so that it requires less pressure effort when fixing the sealing element at the end of the tube, which also results in greater productivity by requiring much less effort.

Furthermore, the applicant is currently unaware of an invention that has all the features described in this specification.

### DESCRIPTION OF THE INVENTION

The present invention has been developed with the aim of providing a sealing element which is configured as a novelty within the field of application and solves the aforementioned drawbacks, further contributing other additional advantages that will be obvious from the description below.

It is therefore an object of the present invention to provide a sealing element for pipes, being of the type which comprises a body of injection-mouldable plastic material, being formed by a central rod section that has at one end a circular plan head region that acts by way of a grip area, the rod section including in a downward direction from said head region, a first centring region with a generally inverted frustoconical shape, a second region with a discoidal outer contour that is defined by at least two flexible fins formed from a pair of diametrically opposed grooves and a third positioning region with a discoidal outer contour, the second region being larger in diameter than the first and third regions. In addition, it includes at least two extensions spaced apart from each other, protruding in the same direction perpendicular to the central rod section, which have a length equal to or less than the diameter of the third positioning region. These two extensions act as contact points linked to ejectors present in the mould for manufacturing the tubular elements, so that they facilitate removal and ensure the release of the part from the mould in each injection process of the parts at all times.

Particularly, the invention is characterised in that the sealing element additionally has a fourth region with a discoidal outer contour defined by at least two flexible fins formed from a pair of diametrically opposed grooves, said fourth region being located between the second region and the third region. In this way, the element has a good sealing feature and provides a greater degree of flexibility of the sealing element when it is placed in the hole of the pipe, being especially suitable for pipes with a larger inner diameter, for example, 25 mm, 40 mm, etc. In addition, due to its geometry, it also guarantees that the seal does not fall unintentionally when it is placed in a hole.

Note that the second region and the fourth region of the sealing element may be dimensionally identical to each other.

To provide and facilitate a greater bending of the grooves of the second region and fourth region, these are aligned in the longitudinal axis of the sealing element.

Preferably, the grooves present in the second and fourth regions have a contour, in a plan view, that is substantially triangular.

Preferably, each of the extensions is located in a region close to the two opposite ends of the central rod section. The fact that the two extensions are arranged in opposite areas with respect to the rod section facilitates the perpendicular ejection of the part from the cavity of the mould where it has been formed, preventing it from being caught in the cavity in an undesired manner.

According to another aspect of the invention, the central rod has a cross-section in the shape of a cross. Advantageously, the cross-section in the shape of a cross between the first and second regions has a tapering configuration in a downstream direction from the first region towards the second region. In this way, the rigidity of the sealing element assembly is improved, enabling at the same time the flexibility of the flexible fins present in the different regions.

Thus, the sealing element described represents an innovative structure with structural and constituent features heretofore unknown for its intended purpose, reasons which, taken together with its usefulness, provide it with sufficient grounds for obtaining the requested exclusivity privilege.

Other features and advantages of the sealing element object of the present invention will be evident in light of the description of a preferred, but not exclusive, embodiment which is illustrated by way of a non-limiting example in the drawings which are attached, wherein:

### BRIEF DESCRIPTION OF THE DRAWINGS

Figure 1 is a perspective view of a preferred embodiment of a sealing element for pipes according to the present invention;
Figure 2 is a side elevation and plan view from below the sealing element shown in Figure 1; and
Figure 3 is a longitudinal cross-sectional view of the sealing element shown in the previous figures.

### DESCRIPTION OF A PREFERRED EMBODIMENT

In light of the aforementioned figures, and in accordance with the adopted numbering, one may observe therein a preferred exemplary embodiment of the invention, which comprises the parts and elements indicated and described in detail below.

The shown embodiment of the sealing element for pipes comprises a body (1) made of injection-mouldable plastic material, for example, low-density polyethylene (LDPE), with a degree of elasticity such that it facilitates the assembly of the plug for the operator, since it requires less effort for the placement thereof in the holes of a tube. Although this task is simple, it must be taken into account that this aspect is relevant when the operator must place a large number of sealing elements during a working day.

The body (1) is made up of an elongated central rod section (2), with a cross-section in the shape of a cross, which has at one end a head region (3) with a circular plan and a flat surface that acts by way of a grip area for the user in the operations of placing and removing the sealing element at one end of the conduit, as well as a stop against the side wall of the tube, once it is assembled.

As can be seen, the head (3) protrudes radially notably with respect to the central rod section (2).

The central rod section (2) includes along the same and in a downstream direction from said head region (3) and separately, a first contour centring region (4) with a general inverted frustoconical shape intended to facilitate the fitting and therefore the centring of the sealing element inside the conduit to be plugged, a second region (5) with a discoidal outer contour that is defined by two flexible fins (50), which are formed from a pair of diametrically opposed grooves (51) and a third positioning region (7) with an external contour with a general inverted frustoconical shape, the second region being of greater diameter than the first and third regions.

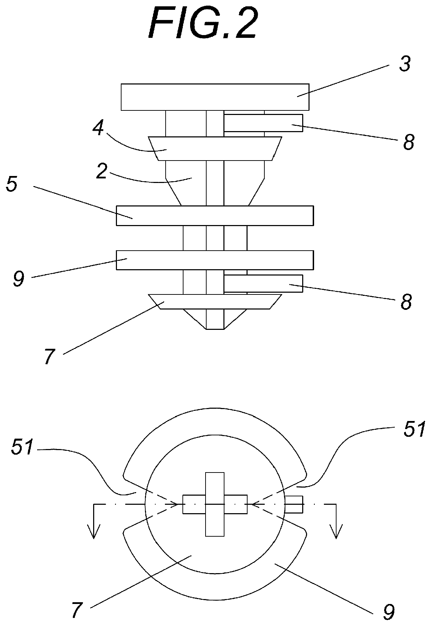

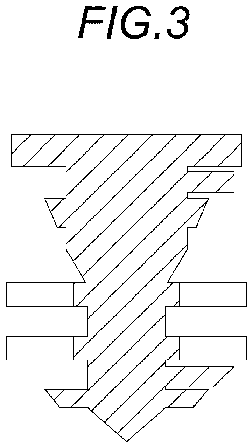

The cross-section in the form of a cross comprised between the first and second regions has a tapering configuration in a downstream direction from the first region towards the second region, as can be seen more clearly in Figures 2 and 3.

Additionally, it includes at least two extensions (8) spaced apart from each other, which protrude in the same direction perpendicular to the central rod section (2), which have a length equal to or less than the diameter of the third positioning region (7). It should also be mentioned that these extensions (8) are parallel to the grooves (51), which also enables them to be used as reference or guide points during the action of inserting the sealing element into a corresponding hole.

To provide a greater degree of flexibility during the placement of the sealing element inside one end of the pipe or conduit, a fourth region (9) is provided with a discoidal outer contour defined by at least two flexible fins (90) formed from a pair of diametrically opposed grooves (91), said fourth region (9) being located between the second region (5) and the third region (7). The second region (5) and the fourth region (9) are dimensionally identical to each other.

Note that the grooves (51, 91) of the second and fourth region, respectively, are aligned in the longitudinal axis of the sealing element.

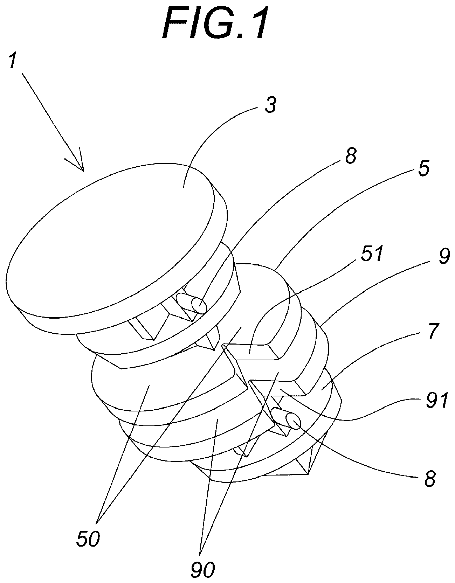

As can be seen in Figure 1, the grooves (51, 91) provided in the second and fourth regions have a substantially triangular contour, in a plan view.

The details, shapes, dimensions and other accessory elements, used to manufacture the sealing element of the invention, may be suitably substituted for others which do not depart from the scope defined by the claims which are included below.

## Claims

1. A sealing element for pipes, which comprises a body (1) of injection-mouldable plastic material, being formed by a central rod section (2) that has at one end a circular plan head region (3) that acts by way of a grip area, the rod section including in a downward direction from said head region (3), a first centring region (4) with a generally inverted frustoconical shape, a second region (5) with a discoidal outer contour that is defined by at least two flexible fins (50) formed from a pair of diametrically opposed grooves (51) and a third positioning region (7) with a discoidal outer contour, the second region (5) being larger in diameter than the first and third regions, including at least two extensions (8) spaced apart from each other, protruding in the same direction perpendicular to the central rod section (2), which have a length equal to or less than the diameter of the third positioning region (7), **characterised in that** it has a fourth region (9) with a discoidal outer contour defined by at least two flexible fins (90) formed from a pair of diametrically opposite grooves (91), said fourth region (9) being located between the second region (5) and the third positioning region (7).

2. The sealing element for pipes according to claim 1, wherein the second region (5) and the fourth region (9) are dimensionally identical to each other.

3. The sealing element for pipes according to any of the preceding claims, wherein the grooves of the second and fourth regions (5, 9) are aligned in the longitudinal axis of the sealing element.

4. The sealing element for pipes according to any of the preceding claims, wherein the grooves provided in the second and fourth regions (5, 9) have a substantially triangular contour, in a plan view.

5. The sealing element for pipes according to claim 1, wherein each of the extensions is located in a region close to the two opposite ends of the central rod section (2).

6. The sealing element for pipes according to any of the preceding claims, wherein the central rod has a cross-section in the shape of a cross.

7. The sealing element for pipes according to claims 1 and 6, wherein the cross-section in the shape of a cross comprised between the first region and second region has a tapering configuration in a downstream direction from the first region towards the second region (7).
